Europäisches Patentamt

European Patent Office

Office européen des brevets

(11) Publication number: **0 319 826 B1**

# EUROPEAN PATENT SPECIFICATION

(45) Date of publication of patent specification: **16.02.94**   (51) Int. Cl.⁵: **G01F  23/38**, G01L 9/10, G01D 5/20

(21) Application number: **88119868.3**

(22) Date of filing: **29.11.88**

(54) **Movement sensor to be employed as pressure or fluid level gauge.**

(30) Priority: **04.12.87 IT 6804487**

(43) Date of publication of application:
**14.06.89 Bulletin  89/24**

(45) Publication of the grant of the patent:
**16.02.94 Bulletin  94/07**

(84) Designated Contracting States:
**AT BE CH DE ES FR GB GR IT LI LU NL SE**

(56) References cited:
**DE-C- 716 728**
**FR-A- 922 890**
**US-A- 2 728 039**
**US-A- 3 864 614**

(73) Proprietor: **SICEB S.p.A.**
**Via Bruno Buozzi, 1**
**I-17045 Savona-Legino(IT)**

(72) Inventor: **Bianco, Giovanni**
**Via Gozzano n.1**
**I-10098 Rivoli-To(IT)**

(74) Representative: **Lotti, Giorgio**
**c/o Ing. Barzanò & Zanardo Milano S.p.A.**
**Corso Vittorio Emanuele II, 61**
**I-10128 Torino (IT)**

## Description

Object of the invention is a movement sensor that can be employed as pressure or fluid level gauge.

Reference is made to an application of the sensor in the automotive field, to simplify this description, and particularly as level gauge of the fuel contained into the tank; it is understood, however, that this device may also be applied in other ways.

The reading of the fuel level in a motor car tank is usually relied on an instrument having moving element and pointer.

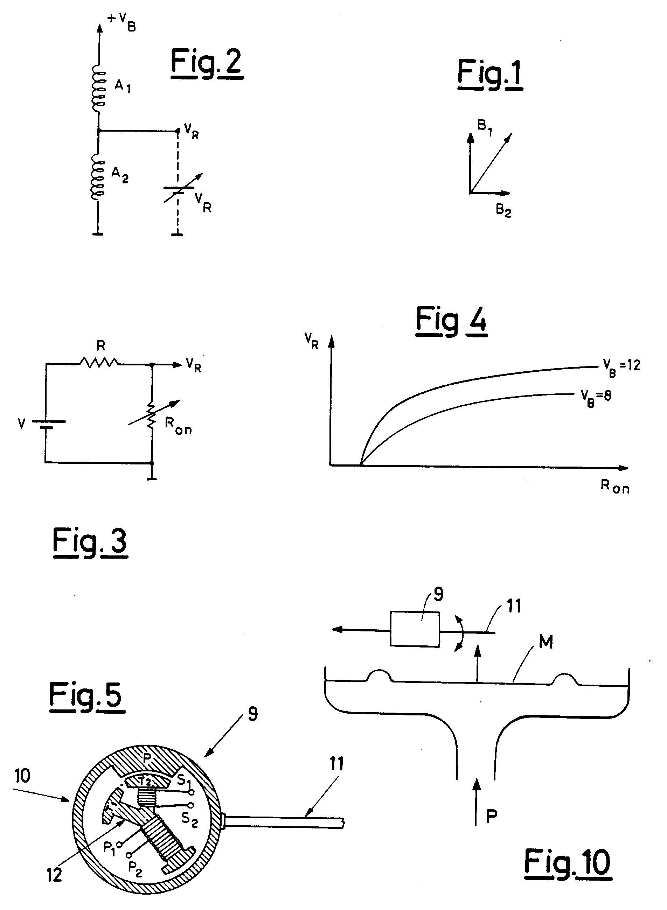

An example is given of the operating principle of the main devices employed nowadays with Fig. 1-4 enclosed herein.

The pointer which indicates the fuel level places itself in a position determined by the vectorial composition (Fig. 1) of two fields $B_1$ and $B_2$ shifted to each other in a 90° space according to the electric diagram of the principle in Fig. 2.

The current in the two windings $A_1$ $A_2$ vary inversely at the variation of voltage $V_R$ determining values of $B_1$ and $B_2$ which compound in a rotated field, proportional to the variation of $V_R$

The moving element of the instrument and the relating pointer, will then stop according to the new direction.

The greater part of today's applications generates variations of $V_R$ setting in parallel a rheostat to one of the windings, e.g. $A_2$.

The cursor of said rheostat, driven by a proper leverage slave to the fuel level in the tank, moves on the surface of the rheostat, proposing different resistance values in the above mentioned parallel; said values vary depending on the level, thus generating variations of $V_R$.

The law according which $V_R$ will vary, will depend on the resistance values $R_1$ of $A_1$ and $R_2$ of $A_2$ , and also on the resistance value $R_{on}$ shown by the rheostat for a given fuel level.

With reference to the diagram of Fig. 3 which illustrates the circuit equivalent to that of fig. 2, as seen from $R_{on}$, we will have that:

$$(1) \qquad V_R = V \bullet R_{on}/ (R + R_{on})$$

where $V = V_B \bullet R_2/ (R_1 + R_2)$ and $R = R_1 \bullet R_2/ (R_1 + R_2)$

According to the relation we have Just written, $V_R$ will vary in a voltage field limited at the bottom by the value $V_r = 0$ (Max fuel level) and on top by the value $V_R = V \bullet R_{on}$ Max$/ (R + R_{on}$ Max) (Min fuel level) - (see Fig. 3 and 4).

This solution, illustrated in the DE-C-716728, which utilizes a rheostat immersed in the fuel to generate a $V_R$ voltage, may originate some inconveniences, as follows:

- a sliding contact being subject to wear and to procure mechanical jams.
- Possibility of deposit of impure matters in the fuel on the resistive film with possible alterations of the contact resistance among cursor, rheostat and resistive film (wrong information on read $R_{on}$).
- Dependence of $V_R$ by the resistance value of the two windings.
- Damping problems in the answer of the instrument which is unable to integrate by itself level variations due to the movement of the fuel with equal quantity.

These problems are being solved by the application of mechanical integrators to damp properly the element which feels the level, generally a float.

- uncertainty area in the lamp switching to communicate the "reserve" condition.

This invention proposes a solution to said inconveniences by substituting a system to the rheostat. The system comprises:

- A position magnetic sensor still driven by a leverage with float.
- An electronic device processing the output voltage of the magnetic sensor and generating a perfectly identical $V_R$ to the one generated by the rheostat without mechanical contact problems (and of impedance matching), with "logic" solution of damping problems, transient variations of level and uncertainty in the reserve communication.

In particular, this invention proposes the realization of a magnetic movement sensor to be employed as pressure or fluid level gauge, said sensor consisting of a variable-coupling transformer, and moving means to be inserted in the fluid to be checked, which means moves depending on the variation of the pressure or of the level of said fluid; said moving means is connected to a body rotating around a variable transformer and is equipped with a magnetic pole so that the rotation of the body determines the variation of the reluctance of the magnetic circuit on the secondary windings of the variable transformer; the signal gathered on the secondary windings is proportional to the position of the moving means inserted in the fluid, thus determining the value to be measured, and wherein skid signal is transferred to a display by electronic conditioning of said signal, characterized in that said variable transformer is inserted in the fluid to be checked and consists of a stationary body having a substantially Y-shaped configuration and holding primary windings on the core and the secondary windings on one of the two tongues: said tongues widen at their ends and face the pole of the rotating body on the outer part of the stationary body, concentrically to said stationary body .

The description of the invention now follows and reference is made to the enclosed drawings:

Fig. 1-4 are diagrams and graphs referring to the known technical method kust described.

Fig. 5 is the plan view of the sensor according to the invention.

Fig. 6a, 6b and 6c illustrate examples of voltage values defined by the sensor of Fig. 5 and by an adequate complex of circuits.

Fig. 7a, 7b, 7c are wave forms obtained from the voltages of Fig. 6a, 6b, 6c.

Fig. 8 is the diagram of the electronics connected to the sensor.

Fig. 9 is a block diagram of a variant of diagram of Fig. 8

Fig. 10 is the diagram of an application of the sensor as fluid pressure gauge.

The position magnetic sensor 9 (Fig. 5) consists of a transformer with magnetic coupling circuit between primary ($P_1$, $P_2$) and variable secondary ($S_1$, $S_2$).

The variation of magnetic coupling is obtained by the rotation of the outer part 10 generated by the leverage 11 according to the fuel level into the tank. A float (not illustrated) is linked to the leverage 11 and dips into the tank.

The rotation of the outer part 10 with respect to the stationary part 12 varies the reluctance of the magnetic circuit on which the secondary $S_1 S_2$ is wound.

In the relating position between the outer part 10 and the stationary part 12 illustrated in Fig. 5, that is with head $T_2$ centered under pole P, there is a minimum reluctance and thus the maximum coupling between primary and secondary. In the above conditions, with an alternative voltage generated by an oscillator applied to the primary, an alternative voltage of equal frequency and maximum amplitude is gathered on the secondary (depending on the ratio between the number of turns on the secondary and the number of turns on the primary, and also on the entity of the stray fluxes, which is in any case repeatable).

If under pole P a head $T_1$ is centered, a minimum amplitude voltage will be gathered at the secondary, as only a small fraction of the flux generated by the primary will be closed through head $T_2$ which will present a high head gap.

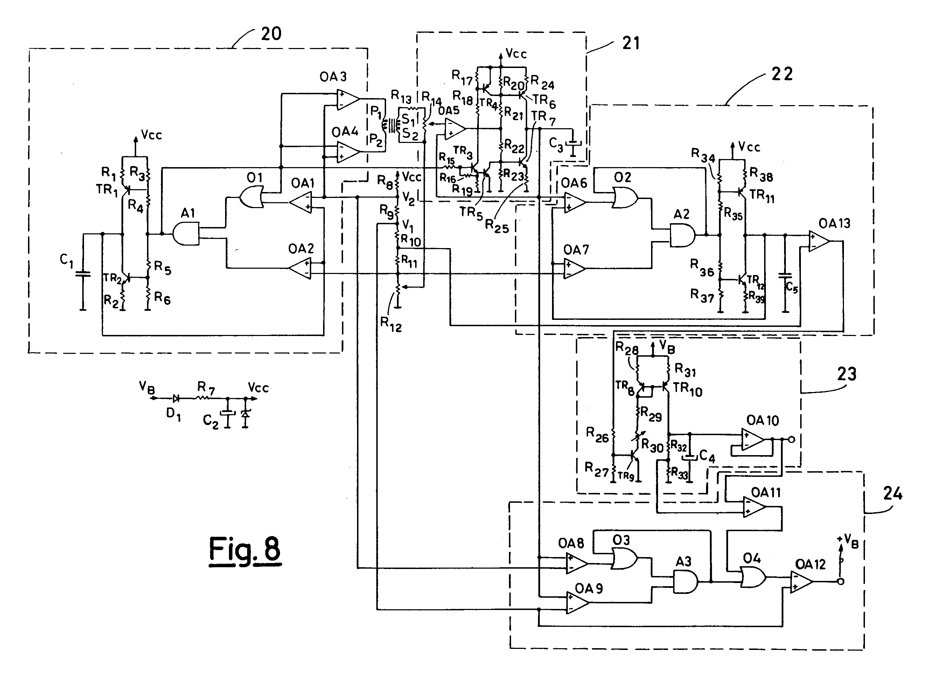

The electronic circuit illustrated in Fig. 8 proposes to translate the output voltage to the position magnetic sensor into a $V_R$ voltage to vary according to a relation perfectly similar to the above relation (1).

A constant of the integration time will also be realized, which will allow a level indication linked to the actual content of fuel, and thus filtered from oscillations of the float due to irregular motions of the motorcar.

Finally, an indication of the "reserve" condition will be generated without uncertainties, by the utilization of an hysteresis circuit.

The generation of a voltage $V_R$ reproposing a relation similar to

$$(1) \qquad V_R = V \cdot R_{on} / (R + R_{on})$$

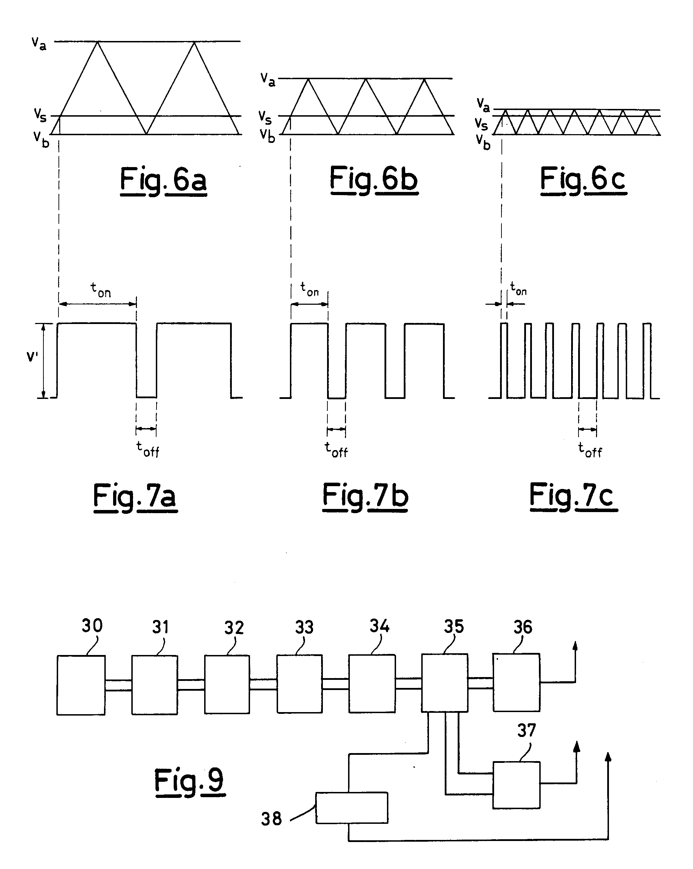

already indicated when we described the known technical method, is obtained by a variable frequency oscillator 22 utilizing a constant current charged and discharged condenser $C_5$, between a bottom stationary threshold $V_b$ and a top variable threshold $V_a$ (fig. 6a, 6b, 6c).

The voltage of the condenser is compared with another fixed voltage level $V_s$ as input of an operational which will give a square wave as output, having variable frequency and "duty cycle" (Fig. 7a, 7b, 7c), but with a $t_{off}$ = fixed T. The mean value of said square wave will be a voltage:

$$(2) \qquad V = V' \cdot t_{on} / (T + t_{on})$$

perfectly similar to relation (1).

Description of the circuit now follows with reference to the diagram of Fig. 8.

The primary of the transformer constituting the sensor is energized by a voltage generated by the fixed frequency oscillator illustrated in block 20 (dashed line). As said oscillator is realized according to a known diagram, it will not be described.

A frequency voltage equal to that on the primary of the transformer is available on the secondary. Said voltage, having an amplitude proportional to the fuel level, is proposed by means of the divider $R_{13}$, $R_{14}$, to the "AC/DC converter" block 21, which has operational OA5 in input, the output of which generates a charge or discharge of $C_3$ by means of transistors TR6 and TR7 fitted as current generators.

In particular, TR6 will generate an "input" current in $C_3$, whilst TR7 will generate an "output" current from $C_3$ so that $C_3$ will be charged or discharged if either TR 6 or TR7 predominates.

The voltage on $C_3$ will tend to equal the peak value of the voltage proposed of the "-" input of OA5 by the divider $R_{13}$ $R_{14}$ due to the operation of TR4 and TR5.

In fact, a square wave having mean null value is found on said divider (neglecting the bias given by $R_{12}$) but having peak-to-peak amplitude proportional to the fuel level.

TR4 and TR5 transistors inhibit the charge or discharge of $C_3$ during the semialternation of said square waves thanks to the connection of the output of gate A1 at the base of TR3 through $R_{15}$.

The direction of the winding of $S_1$ $S_2$ will have been such that the inhibition action is active during the negative semialternation proposed at "-" input of OA5.

Therefore, the lock-in of $C_3$ to the voltage on "-" input of OA5 may be made during the positive semialternation.

As a square wave is concerned, $C_3$ will be brought to the peak value of said wave form thus proposing a continuous voltage proportional to the fuel level in the tank (plus the bias of $R_{12}$), and responding to level variations with a constant of time function of C and of the current value proposed by generators charging or discharging $C_3$.

In the response of the level gauge, this time constant will permit to obtain the required damping effect.

The voltage level on $C_3$ represents the variable threshold $V_a$ illustrated in Fig. 6a, 6b, 6c and is proposed to the "-" input of OA6.

The V level staticized by the divider $R_8 + R_9 + R_{10} + R_{11}$ and $R_{12}$ is instead proposed at the "-" input of OA7.

Condenser $C_5$ of block 22 will oscillate between $V_b$ and $V_a$ ; the structure of the oscillator is similar to the one described in block 20, without considering operational OAB.

The voltage on $C_5$ is being compared by means of OA13 with a voltage $V_s$ illustrated in fig. 6a, 6b and 6c and obtained by divider $R_8 + R_9 + R_{10}$ and $R_{11} + R_{12}$.

The output of OA13 will follow the proceeding as illustrated in Fig. 7a, 7b, 7c with $t_{off} = T =$ constant and a variable $T_{on}$ from maximum to zero.

In order to clarify the parameters which make the analogy between the relations (1) and (2) valid, we now refer to a tangible example of a system consisting of an instrument exhibiting the following (see Fig. 2) :
a winding $A_1$ of resistance $R_1 = 175 \ \Omega$
a winding $A_2$ of resistance $R_2 = 147 \ \Omega$
and a rheostat having MaxR $= 300 \ \Omega$
Therefore (Fig. 2 and 3) for $V_B = 12v$
$R = 80\Omega \quad V = 5.48v$
Block 23 translates the wave form in input on $R_{26}$ represented in Fig. 7a in a D.C. at the output of OA10 which forms our $V_R$;in said block, action is made on the potentiometer $R_{30}$ to obtain $V_R = 5.48v$ with $R_{26}$ forced to a $V_B$ .

Said condition establishes the unconnected rheostat equivalence, therefore $R_{on} = \infty = t_{on} = \infty$, which must ensure the same output voltage on $V_R$.

A second condition required by the analogy of the two systems is:
Max $R_{on}/R =$ Max $T_{on}/T$ that is: Max Ton/T = 3.75
It appears clear from Fig. 6a that:

$$\text{Max } T_{on}/T = \text{Max } (V_a - V_s)/(V_s - V_b)$$

Having chosen $V_s - V_b = .28v$ it follows that:
Max $(V_a - V_s) = 1.05v$.

Said condition may be reached operating on Trimmer $R_{14}$ to obtain a variation on C equal to 1.05v when the magnetic sensor moves from the position corresponding to the minimum fuel level to the one corresponding to the maximum fuel level. The voltage on $C_3$ corresponding to the max fuel level (therefore minimum voltage value on $C_3$) must coincide with $V_s$ , acting on Trimmer $R_{12}$, in order to obtain t $_{on} = 0$ (corresponding to R $= 0$) (see Fig. 7).

The circuit is completed with block 24 which must supply an indication of "reserve" and of erroneous "full". It is a two threshold comparator unit ; said thresholds are being read between $R_9$ and $R_{10}(V_1)$ by OA9 and between $R_8$ and $R_9(V_2)$ by OA8.

The voltage value of $C_3$ is compared by means of said thresholds and the higher is said value, the lower is the fuel level.

The "reserve" indication corresponding to the low state of the output of OA12 (to switch on a lamp having a connection at $V_B$) is obtained when the two inputs " + " of OA8 and OA9 locked-in at $C_3$ have overcome both thresholds. Said indication remains even if the voltage of $C_3$ should again descend under $V_2$ level thanks to the "latch" realized by the gate $O_3$ , cancelling any signalling uncertainty.

Operational OA11 and the gate OA4 have been added to avoid erroneous indication of "full", due for instance to a short circuit on the output of OA10.

The output of OA10, connected to the input "-" of OA11, in normal conditions will always be higher than the threshold read between $R_{32}$ and $R_{33}$ by the " + " input of OA11 and thus the output of OA11 will always be low.

In case of a short circuit on the output of OA10 the " + " input of OA11 will have a higher voltage than the one of "-" input; thus the input of OA11 will be high and a simultaneous indication of "full" and "reserve" will communicate the breakdown.

A second embodiment of electronic complex of circuits is now going to be described; said embodiment coupled with the type of electromechanical sensor described above is able to give different performances from those of the circuit illustrated in Fig. 8.

Said circuit of Fig. 8 gives an output simulating an R which is variable from a maximum to zero in linear mode with a sensor rotation angle for a 90° maximum rotation. The fluid level may require, in general, a non linear relation with R, due both to the effect of the non linear relation between the angle and height measured by the float, and to the geometry of the tank requiring a non linearity between the fluid level and its volume.

A solution of the problem may be to utilize the circuit of Fig. 8, transferring said non linearity on the instrument scale which will then be non linear and suitable to the features of the tank.

In the case the linearity of the instruments is to be kept, the diagram of Fig. 9 may be used; said diagram may also be applied to a digital instrumentation drive.

The circuit of Fig. 9 consists of an oscillator 30, the sensor 31 and an AC/D.C. converter operating similarly to the circuit of Fig. 8 previously described. In this case, the D.C. output is sent to a digital analog converter 33, the output of which is being digitally "damped" by known circuits which are schematically illustrated in block 34.

The network of block 34 is formed by an oscillator (clock), an up-down counter counting the impulses of clock, a digital comparator unit.

The comparator unit compares the output of block 33 (A/D converter) with the output of the "up-down" counter and presets it "up" (situation similar to a condenser charge) if its content is lower than the output of A/D converter; it presets it "down" (situation similar to a condenser discharge) if its content is higher than the output of A/D converter; in case of equality the count will be locked.

Therefore, the output of said block will follow the output of A/D converter "damping" it digitally.

The output digital information from block 34 is being converted into a new digital value through the "transfer function" 35 realized on STATIC memory and programmable according to type of tank. Said block 35 enables to correct the non linearity of the sensor and of the tank allowing to propose to block 36 a correct indication about the fluid volume existing into the tank under any condition; said block 36 converts the digital information into a resistive value. Some information to drive the reserve signal 37 are obtained from said block 35, as well as to handle a digital instrument with a correct interface 38.

The employment of sensor 9 as a fluid pressure sensor is observed in Fig. 10.

In this embodiment, sensor 9 operates as movement sensor where said movement is the same as that of an elastic membrane M being deformed (generating movements according to pressure P applied on it by the fluid).

## Claims

1. Magnetic movement sensor to be employed as pressure or fluid level gauge, said sensor (19) consisting of a variable-coupling transformer and moving means (11) inserted in the fluid to be checked, which means (11, M) moves depending on the variation of the pressure or of the level of said fluid; said moving means is connected to a body (10) rotating around a variable transformer (11) and is equipped with a magnetic pole so that the rotation of the body (10) determines the variation of the reluctance of the magnetic circuit on the secondary windings ($S_1$-$S_2$) of the variable transformer; the signal gathered on the secondary winding ($S_1$-$S_2$) is proportional to the position of the moving means (11, M) inserted in the fluid, thus determining the value to be measured, wherein said signal is transferred to a display by electronic conditioning (20) of said signal, characterized in that said variable transformer is inserted in the fluid to be checked and consists of a stationary body (12) having a substantially Y-shaped configuration and holding primary windings ($P_1$-$P_2$) on the core and the secondary windings ($S_1$-$S_2$) on one of the two tongues: said tongues widen at their ends ($T_1$-$T_2$) and face the pole of the rotating body (10) on the outer part of the stationary body (12), concentrically to said stationary body (12).

2. Sensor according to claim 1 wherein the means inserted in the fluid is a float rigidly connected (11) to the body (10) rotating around the variable transformer (12).

3. Sensor according to claim 1 wherein the means inserted in the fluid is a membrane (M), which is deformable according to the variation of the pressure of said fluid; said membrane is linked to the body (10) rotating around the variable transformer.

4. Sensor according to claim 1 wherein the rotation of the body (10) around the variable transformer generates such a reluctance variation of the magnetic circuit that a square amplitude signal, peak-to peak, proportional to the position of the means (11) into the fluid is gathered on the secondary ($S_1$-$S_2$) of the transformer.

5. Electronic device connected to a sensor according to the previous claims, delivering a square amplitude signal peak-to-peak, wherein said device comprises means for the transformation of the output voltage from the magnetic sensor (9) to a voltage V which varies according to the relation

$$V = V' \, t_{on} / (T + t_{on})$$

where V' is the height of the square wave, T is a time constant among the generated square waves and $T_{on}$ is the length of the generated square waves.

6. Electronic device according to claim 5 wherein it comprises a variable amplitude oscillator (30) which utilizes a constant current charged and discharged between a bottom fixed threshold $V_b$ and an upper variable threshold $V_a$: the voltage of the condenser compares with a fixed voltage level $V_s$ at the input of an operational which gives in output said square wave having variable frequency and "duty cycle" and fixed said time $T = t_{off}$.

7. Electronic device according to claim 6 wherein it comprises a signalling logic of the reserve and erroneus full indication operating by means of an hysteresis circuit.

8. Electronic device linked to the sensor according to claims 1 to 2 wherein it comprises a variable oscillator (30) and an A.C./D.C. converter, linked to the sensor (9), the input of which is sent to an analog-digital converter (33), is being damped and reconverted into a new digital value by means of a programmable static memory (35), depending on physical features of the tank of the fluid to be checked; a digital value converter (36) detected in a resistive value determining the correct indication of the value to be detected.

9. Electronic device according to claim 9 wherein it comprises a further digital code (38) output suitable to the digital display drive.

**Patentansprüche**

1. Magnetischer Bewegungssensor zur Verwendung als Druck- oder Flüssigkeitsniveau-Meßgerät, wobei der Sensor (19) aus einem veränderbaren Kopplungstransformator und einer Bewegungseinrichtung (11) besteht, die in die zu kontrollierende Flüssigkeit eingesetzt ist, welche Einrichtung (11, M) sich in Abhängigkeit von der Änderung des Druckes oder des Niveaus der Flüssigkeit bewegt, wobei die Bewegungseinrichtung mit einem Körper (10) verbunden ist, der sich um eben veränderbaren Transformator (11) dreht und mit einem Magnetpol versehen ist, so daß die Drehung des Körpers (10) die Änderung des magnetischen Widerstandes des Magnetkreises an den Sekundärwicklungen ($S_1$-$S_2$) des veränderbaren Transformators bestimmt, das an den Sekundärwicklungen ($S_1$-$S_2$) aufgenommene Signal der Position der Bewegungseinrichtung (11, M) proportional ist, die in Flüssigkeit eingesetzt ist und dadurch den zu messenden Wert bestimmt, und wobei das Signal durch elektronische Konditionierung (20) des Signals in eine Anzeige umgesetzt wird,
**dadurch gekennzeichnet, daß**
der veränderbare Transformator in die zu kontrollierende Flüssigkeit eingesetzt ist und einen stationären Körper (12) aufweist, der eine im wesentlichen Y-Form hat und Primärwicklungen ($P_1$-$P_2$) auf dem Kern und die Sekundärwicklungen ($S_1$-$S_2$) auf einer von zwei Zungen trägt, wobei sich die Zungen an ihren Enden ($T_1$-$T_2$) verbreitern und dem Pol des sich drehenden Körpers (10) auf dem äußeren Teil des stationären Körpers (12) konzentrisch zugewandt sind.

2. Sensor nach Anspruch 1
**dadurch gekennzeichnet, daß**
die in die Flüssigkeit eingesetzte Einrichtung ein dem Körper (10), der sich um den veränderbaren Transformator (12) dreht, starr verbundener Schwimmer (11) ist.

3. Sensor nach Anspruch 1,
**dadurch gekennzeichnet, daß**
die in die Flüssigkeit eingesetzte Einrichtung eine Membran (M) ist, die entsprechend der Änderung des Druckes des Flüssigkeit verformbar und die mit dem sich um den veränderbaren Transformator drehenden Körper (10) verbunden ist.

4. Sensor nach Anspruch 1,
**dadurch gekennzeichnet, daß**
die Drehung des Körpers (10) um den veränderbaren Transformator eine derartige Änderung des magnetischen Widerstandes des Magnetkreises erzeugt, daß ein Spitze-Spitze-Rechteck-Amplituden-Signal, das der Position der Einrichtung (11) in der Flüssigkeit proportional ist, an der Sekundärwicklung ($S_1$-$S_2$) des Transformators aufgenommen wird.

5. Elektronische Vorrichtung, die mit einem Sensor nach einem der vorherigen Ansprüche verbunden ist und ein Spitze-Spitze-Rechteck-Amplituden-Signal abgibt, wobei die Vorrichtung eine Einrichtung zur Umwandlung der Ausgangsspannung des magnetischen Sensors (9) in eine Spannung V aufweist, die sich entsprechend der Beziehung

$$V = V' \, t_{on} / (T + t_{on})$$

ändert, in der V' die Höhe der Rechteckwelle, T eine Zeitkonstante zwischen den erzeugten Rechteck-Wellen ist, und $T_{on}$ die Länge der erzeugten Rechteckwellen ist.

6. Elektronische Vorrichtung nach Anspruch 5, **dadurch gekennzeichnet, daß** sie einen veränderbaren Amplituden-Oszillator (30) aufweist, der einen konstanten Strom verwendet, der zwischen einem festen unteren Schwellwert $V_b$ und einem oberen veränderbaren Schwellwert $V_a$ ge- und entladen wird: dabei wird die Spannung des Kondensators mit einem festen Spannungspegel $V_s$ am Eingang eines Funktionsverstärkers verglichen, der am Ausgang die Rechteck-Welle abgibt, deren Frequenz und "Tastverhältnis" veränderbar und deren Zeit $T = t_{off}$ fest ist.

7. Elektronische Vorrichtung nach Anspruch 6, **dadurch gekennzeichnet, daß** sie eine Signalgeber-Logik mit Reserve- und Fehler-Vollanzeige aufweist, die mittels eines Hysterese-Kreises arbeitet.

8. Elektronische Vorrichtung die mit dem Sensor nach den Ansprüchen 1 bis 2 verbunden ist, **dadurch gekennzeichnet, daß** sie einen veränderbaren Oszillator (30) und einen A.C./C.D.-Umsetzer aufweist, der mit dem Sensor (9) verbunden ist, dessen Eingangssignal einem Analog-Digital-Umsetzer (33) zugeführt wird und das gedämpft wieder in einen neuen digitalen Wert mittels eines programmierbaren statischen Speichers (35) in Abhängigkeit von den physikalischen Eigenschaften des zu kontrollierenden Flüssigkeitstanks umgesetzt wird, sowie einen Digitalwert-Umsetzer (36) der einen Widerstandswert erfaßt, der die korrekte Anzeige des zu erfassenden Wertes bestimmt.

9. Elektronische Vorrichtung nach Anspruch 8, **dadurch gekennzeichnet, daß** sie weiterhin einen Digital-Code-Ausgang (38) aufweist, der für die Digitalanzeige-Ansteuerung geeignet ist.

**Revendications**

1. Détecteur de mouvement magnétique destiné à être utilisé comme indicateur de pression ou de niveau de fluide, ledit détecteur (19) étant composé d'un transformateur à couplage variable et d'un moyen mobile (11) introduite dans le fluide à contrôler, lequel moyen (11, M) se meut en fonction de la variation de la pression ou du niveau dudit fluide, ledit moyen mobile étant connecté à un corps (10) rotatif autour d'un transformateur variable (11) et est équipé d'un pôle magnétique de manière que la rotation du corps (10) détermine la variation de la réluctance du circuit magnétique sur les enroulements secondaires ($S_1$ - $S_2$) du transformateur variable, le signal collecté sur les enroulements secondaires ($S_1$ - $S_2$) est proportionnel à la position du moyen mobile (11, M) introduit dans le fluide, déterminant ainsi la valeur à mesurer, dans lequel ledit signal est transféré à un affichage par conditionnement électronique (20) dudit signal, caractérisé en ce que ledit transformateur variable est introduit dans le fluide à contrôler et consiste en un corps stationnaire (12) ayant une configuration sensiblement en forme de Y et portant des enroulements primaires ($P_1$ - $P_2$) sur le noyau et les enroulements secondaires ($S_1$ - $S_2$) sur l'une des deux languettes, lesdites languettes étant élargies à leurs extrémités ($T_1$ - $T_2$) et se trouvant face au pôle du corps rotatif (10), sur la partie extérieure du corps stationnaire (12), de manière concentrique audit corps stationnaire (12).

2. Détecteur suivant la revendication 1, dans lequel le moyen introduit dans le fluide est un flotteur (11) rigidement connecté au corps (10) rotatif autour du transformateur variable (12).

3. Détecteur suivant la revendication 1, dans lequel le moyen introduit dans le fluide est une membrane (M) qui est déformable selon la variation de la pression dudit fluide, ladite membrane étant reliée au corps (10) rotatif autour du transformateur variable.

4. Détecteur suivant la revendication 1, dans lequel la rotation du corps (10) autour du transformateur variable engendre une variation de réluctance du circuit magnétique telle qu'un signal d'amplitude carrée, crête à crête, proportionnel à la position du moyen (11) dans le fluide est collecté sur le secondaire ($S_1$ - $S_2$) du transformateur.

5. Dispositif électronique relié à un détecteur suivant les revendications précédentes, délivrant un signal d'amplitude carrée crête à crête dans lequel ledit dispositif comprend un moyen pour transformer la tension de sortie *du* détecteur magnétique (9) en une tension V qui varie selon la relation

$$V = V' \cdot t_{on} / (T + t_{on})$$

où V' est la hauteur de l'onde carrée, T est une constante de temps parmi les ondes carrées générées et $T_{on}$ est la longueur des ondes carrées générées.

**6.** Dispositif électronique suivant la revendication 5, comprenant un oscillateur à amplitude variable (30) qui utilise un courant constant chargé et déchargé entre un seuil bas fixé $V_b$ et un seuil haut variable $V_a$, la tension du condensateur est comparée à un niveau de tension fixé $V_s$ à l'entrée d'un amplificateur opérationnel qui donne en sortie ladite onde carrée ayant une fréquence et un "cycle de service" variables et ledit temps $T = t_{off}$ fixe.

**7.** Dispositif électronique suivant la revendication 6, comprenant une logique de signalisation de la réserve et de l'indication erronée du plein fonctionnant à l'aide d'un circuit d'hytérésis.

**8.** Dispositif électronique relié au détecteur suivant les revendications 1 à 2, comprenant un oscillateur variable (30) et un convertisseur AC/DC, relié au détecteur (9), dont l'entrée est envoyée à un convertisseur analogique-numérique (33), stabilisée et reconvertie en une nouvelle valeur numérique, à l'aide d'une mémoire statique (35) programmable en fonction des caractéristiques physiques du réservoir du fluide à contrôler, un convertisseur (36) de valeur numérique détectée en valeur ohmique déterminant l'indication correcte de la valeur à détecter.

**9.** Dispositif électronique selon la revendication 9, comprenant une autre sortie de code numérique (38) appropriée à la commande d'affichage numérique.

Fig.2

Fig.1

Fig.3

Fig 4

Fig.5

Fig.10

$V_a$

$V_s$

$V_b$

### Fig.6a

$V_a$

$V_s$

$V_b$

### Fig.6b

$V_a$
$V_s$
$V_b$

### Fig.6c

$t_{on}$

$V'$

$t_{off}$

### Fig.7a

$t_{on}$

$t_{off}$

### Fig.7b

$t_{on}$

$t_{off}$

### Fig.7c

30  31  32  33  34  35  36

37

### Fig.9

38

Fig.8

EP 0 319 826 B1